# FASCICULE DE BREVET EUROPEEN

(11) **EP 4 156 606 B1**
(45) Date de publication et mention de la délivrance du brevet: **22.04.2026**
(21) Numéro de dépôt: 22197013.0
(22) Date de dépôt: 22.09.2022
(51) Int. Cl.: H04L 9/40

(54) **PROCÉDÉ DE GESTION D'UN UTILISATEUR INTERVENANT DANS UNE COMMUNICATION DE GROUPE**
VERFAHREN ZUR VERWALTUNG EINES BENUTZERS, DER IN EINER GRUPPENKOMMUNIKATION BETEILIGT IST
METHOD FOR MANAGING A USER INVOLVED IN A GROUP COMMUNICATION

(30) Priorité: 23.09.2021 FR 2110008
(43) Date de publication de la demande: 29.03.2023
(73) Titulaire: THALES, 92190 Meudon (FR)
(72) Inventeur: MATHIEU, Christophe, 78141 VELIZY Cedex (FR); MICHAUX, Nicolas, 78141 VELIZY Cedex (FR); DELATTRE, Michel, 92622 GENNEVILLIERS Cedex (FR)
(74) Mandataire: Atout PI Laplace

(56) Documents cités:
- US-A1- 2011 249 817
- WALLNER D ET AL: "RFC 2627: Key Management for Multicast: Issues and Architectures", 1 June 1999 (1999-06-01), XP055919491, Retrieved from the Internet <URL:https://www.rfc-editor.org/rfc/rfc2627> [retrieved on 20220510]

## Description

### Domaine technique

La présente invention se situe dans le domaine des télécommunications sécurisées. Plus particulièrement, elle adresse les problématiques d'authentification, de confidentialité et d'intégrité des communications critiques de type groupe d'intervention des services de protection, tels que les services de protection civile.

### Technique antérieure

Au cours d'un évènement, tel qu'un attentat, une catastrophe naturelle ou un accident collectif, différents groupes d'intervention peuvent être en action pour apporter des secours aux victimes (les pompiers, forces de l'ordre, SAMU, protection civile, etc). Les opérations d'intervention nécessitent une assurance forte en termes de sécurité, de disponibilité et de temps de mise en œuvre, et chacun des groupes d'intervention dispose des moyens permettant d'établir dynamiquement des canaux d'échanges sécurisés et propre à chaque groupe. Par canaux d'échanges, on comprend les paramètres d'adressage comme l'adressage IP (Internet Protocole) et les fonctions de mise en relation comme les contrôleurs de prise de parole du Push-to-Talk couramment utilisés dans les groupes d'interventions. Les terminaux utilisés peuvent être gérés en pool, c'est-à-dire que l'utilisateur prend un terminal libre au moment de sa mission, par exemple, un sapeur-pompier partant sur le terrain d'intervention. Les éléments secrets initiaux sont portés non pas par un enrôlement préalable mais par une procédure d'authentification de l'utilisateur. Cette procédure peut-être multi facteur, c'est-à-dire comportant plusieurs éléments de preuve, dont, par exemple, la présentation d'une carte à puce sans contact détenu par l'utilisateur. Il faut donc un mécanisme souple d'établissement de communications de groupe qui garantit l'identité et l'authentification des acteurs et qui maintient l'intégrité et la confidentialité des canaux d'échanges.

Le standard ETSI 3GPP (pour «European Telecommunications Standards Institute » en anglais et « 3rd Generation Partnership Project » en anglais) est un standard qui définit des normes pour les services critiques fournis sur les réseaux de communications publiques 4G et au-delà. Ce standard s'appuie sur un mécanisme de distribution de clés dit MIKEY-SAKKE décrit par les RFCs (pour « Request For Comments » en anglais) de l'IETF. Ce mécanisme est fondé sur les propriétés des techniques cryptologiques à courbe elliptique et en particulier les principes de clés de chiffrement asymétrique dites Identity-based Encryption ou IBE où la partie publique de la paire est déduite de l'identité du détenteur de la partie privée.

L'inconvénient majeur dans le standard 3GPP est la difficulté à révoquer des paires de clés de chiffrement asymétrique IBE puisque la partie publique est par construction directement déduite de l'identité du détenteur de la partie privée sans possibilité pour l'utilisateur de ladite partie publique de détecter la révocation de la paire de clés. Cette révocation peut être due à la compromission de la partie privée ou au bannissement du détenteur de cette partie privée. Par compromission ou bannissement, on comprend qu'un utilisateur d'un des réseaux de communication devient malveillant et fournit des informations erronées pouvant perturber l'ensemble des opérations de secours. L'utilisateur est considéré comme malveillant, lorsque par exemple, le terminal utilisé tombe entre les mains d'une personne nuisible externe au groupe d'intervention qui fournit de fausses informations. Il faut donc passer par un changement de l'ensemble des clés d'un groupe d'intervention pour exclure l'utilisateur malveillant. Ce changement prévu par le standard consiste à modifier les paramètres d'un domaine de sécurité. Or un tel changement perturbe fortement le service en générant des coupures de communication lors des changements de clé de chiffrement. Wallner D ET AL: "RFC 2627: Key Management for Multicast: Issues and Architectures",, 1 juin 1999, décrit a gestion des clés pour les sessions de communication multicast, en se concentrant sur l'initialisation du groupe multicast avec une clé de réseau commune et le réencryptage du groupe lorsque cela est nécessaire. Le document décrit plusieurs architectures de gestion des clés, y compris la distribution manuelle des clés, l'approche des clés par paires racine/feuille N, l'approche des variables complémentaires et l'approche de l'arbre hiérarchique.

Il existe donc un besoin de limiter l'indisponibilité des services critiques lors d'une procédure d'exclusion d'un utilisateur malveillant dans un réseau de communication.

### Exposé de l'invention

La présente invention vise à remédier au moins en partie à ce besoin.

Plus particulièrement, la présente invention a pour objectif d'améliorer la révocation de clés de sécurité lors d'une exclusion d'un utilisateur.

Pour cela un premier objet de l'invention concerne un procédé de gestion d'un utilisateur dans une communication de groupe. Ladite communication de groupe comprend une pluralité d'autres utilisateurs. L'utilisateur et la pluralité d'autres utilisateurs sont aptes à communiquer entre eux de manière sécurisée dans ladite communication de groupe en utilisant une clé de chiffrement symétrique. Le procédé de gestion comporte une étape de réception d'une requête d'exclusion de l'utilisateur, dit utilisateur à exclure, ladite requête d'exclusion ayant été envoyée par un serveur de contrôle à un serveur de gestion de clés (KMS), une étape de détermination des autres utilisateurs apte à intervenir dans ladite communication de groupe, une étape de génération d'une nouvelle clé de chiffrement symétrique. Le procédé comprend également une étape de transmission aux autres utilisateurs de la nouvelle clé de chiffrement symétrique et d'une notification pour l'utilisation de ladite nouvelle clé de chiffrement symétrique à la place de la clé de chiffrement symétrique utilisée avant la réception de la requête d'exclusion de l'utilisateur, ladite nouvelle clé de chiffrement symétrique n'étant pas transmise à l'utilisateur à exclure. Lesdites étapes de détermination, de génération et de transmission étant réalisées par le serveur de gestion de clés.

Le procédé permet ainsi de révoquer, de manière simple et pratique, la clé de chiffrement symétrique utilisée dans le réseau de communication. Une nouvelle clé de chiffrement symétrique est transmise aux utilisateurs du réseau à l'exception de l'utilisateur à exclure. L'utilisateur malveillant sera de fait exclu de toutes communications avec les autres utilisateurs du réseau. Les autres utilisateurs sont alors des utilisateurs autorisés actifs. L'établissement d'une communication de groupe va permettre à ces autres utilisateurs en action sur le terrain de fournir les canaux d'échanges.

Dans un mode de réalisation particulier, l'utilisateur à exclure intervient dans plusieurs communications de groupe et le procédé comporte une étape de détermination des communications de groupe dans lesquels intervient l'utilisateur à exclure. Pour chaque communication de groupe dans laquelle intervient l'utilisateur à exclure, le procédé comprend une étape de détermination des autres utilisateurs apte à intervenir dans ladite communication de groupe et une étape de génération d'une nouvelle clé de chiffrement symétrique. Le procédé comprend également une étape de transmission aux autres utilisateurs de la nouvelle clé de chiffrement symétrique et d'une notification pour l'utilisation de ladite nouvelle clé de chiffrement symétrique à la place de la clé de chiffrement symétrique utilisée avant la réception de la requête d'exclusion de l'utilisateur, ladite nouvelle clé de chiffrement symétrique n'étant pas transmise à l'utilisateur à exclure.

Le procédé permet ainsi d'exclure l'utilisateur malveillant de l'ensemble des canaux d'échanges dans lesquels il intervient. En effet, l'utilisateur malveillant intervient dans plusieurs communications de groupe sécurisés et a donc connaissance de plusieurs clés de chiffrement symétrique qui deviennent, de ce fait, compromises.

Dans un mode de réalisation particulier, les clés de chiffrement symétrique ayant une durée de validité prédéterminée, la nouvelle clé de chiffrement symétrique a une durée de validité identique à celle de la clé de chiffrement symétrique qu'elle remplace.

La nouvelle clé de chiffrement symétrique se substitue ainsi dans le temps à la clé de chiffrement symétrique d'origine.

Dans un mode de réalisation particulier, la nouvelle clé de chiffrement symétrique est compatible avec un algorithme AES.

Dans un mode de réalisation particulier, préalablement à l'étape de transmission de la nouvelle clé de chiffrement symétrique, la nouvelle clé de chiffrement symétrique est cryptée à l'aide d'une clé de chiffrement asymétrique publique pour former une clé de chiffrement symétrique cryptée. La clé de chiffrement symétrique cryptée est apte à être décryptée par un des autres utilisateurs détenant une clé de chiffrement asymétrique privée associée à ladite clé de chiffrement asymétrique publique.

Dans un mode de réalisation particulier, une paire de clés comprenant la clé de chiffrement asymétrique publique et la clé de chiffrement asymétrique privée est spécifique à chaque utilisateur des autres utilisateurs.

Dans un mode de réalisation particulier, la paire de clés est générée à partir d'un identifiant de l'utilisateur des autres utilisateurs.

Dans un mode de réalisation particulier, le procédé comprend une étape de détermination d'un domaine de sécurité dans lequel tout ou partie de la clé de chiffrement asymétrique publique est réalisée à partir d'une fonction de hash de l'identifiant de l'utilisateur et d'un numéro d'ordre.

L'utilisation d'un numéro d'ordre facilite la gestion des clés de chiffrement asymétrique par un serveur de gestion KMS, notamment lorsque la logique dudit serveur de gestion KMS est répartie sur plusieurs nœuds du réseau de communication.

Dans un mode de réalisation particulier, l'utilisateur et la pluralité d'autres utilisateurs communiquent via un réseau radio centralisé compatible 4G et/ou 5G.

Dans un mode de réalisation particulier, l'utilisateur à exclure intervient dans une première communication de groupe utilisant un réseau radio centralisé et intervient dans une seconde communication de groupe utilisant un réseau radio décentralisé, ledit utilisateur à exclure étant à l'initiative de l'établissement de ladite seconde communication de groupe, l'exclusion dudit utilisateur entraîne une libération de cette seconde communication de groupe dès que les autres utilisateurs intervenant dans la seconde communication de groupe peuvent accéder au réseau radio centralisé.

L'utilisateur à exclure est à l'initiative de l'établissement de la seconde communication de groupe sécurisée par une clé de chiffrement symétrique. Il a pu fournir de manière sécurisée aux utilisateurs de la seconde communication de groupe la clé de chiffrement symétrique grâce aux clés publiques asymétriques IBE des autres utilisateurs et à une signature par sa clé privée asymétrique IBE. L'exclusion de l'utilisateur à exclure entraîne la libération de cette seconde communication de groupe dès que les autres utilisateurs peuvent accéder aux services du réseau radio centralisé pour vérifier le non-bannissement de cet initiateur.

Un autre objet de l'invention concerne un serveur de gestion de clés pour la transmission d'une clé de chiffrement symétrique à des utilisateurs dans une communication de groupe en vue de communiquer de manière sécurisée dans ladite communication de groupe. Le serveur de gestion de clés comprend les éléments suivants :
une unité centrale de traitement de données, une interface entrée/sortie, un module de génération de clés de chiffrement asymétrique, un module de génération de clés de chiffrement symétrique, une base de données listant les utilisateurs appartenant au groupe de communication, lesdits éléments étant configurés pour mettre en œuvre les étapes d'un procédé de gestion d'un utilisateur à exclure hors de la communication de groupe selon l'invention.

Dans un mode de réalisation particulier, l'utilisateur à exclure intervient dans une pluralité de communications de groupe, ladite base de données étant apte à lister les utilisateurs intervenant dans ladite pluralité communications de groupe.

Dans un mode de réalisation particulier, le serveur de gestion est réparti sur plusieurs nœuds d'un réseau de communication.

La présente invention sera mieux comprise à la lecture de la description détaillée de modes de réalisation pris à titre d'exemples nullement limitatifs et illustrés par les dessins annexés sur lesquels :
[Fig 1] la figure 1 illustre les étapes d'un procédé de gestion dans une communication de groupe ;
[Fig 2] la figure 2 illustre un premier mode de réalisation dans lequel le procédé de gestion de la figure 1 est mis en œuvre dans une communication de groupe ;
[Fig 3] la figure 3 illustre un second mode de réalisation dans lequel le procédé de gestion de la figure 1 est mis en œuvre dans deux communications de groupe ;
[Fig 4] la figure 4 illustre un troisième mode de réalisation dans lequel le procédé de gestion de la figure 1 est mis en œuvre dans deux communications de groupe dont une desdites communication fonctionne selon un réseau radio décentralisé ;
[Fig 5] la figure 5 détaille les différents éléments d'un serveur de management de clés pour la mise en œuvre des étapes du procédé de gestion de la figure 1.

L'invention n'est pas limitée aux modes de réalisation et variantes présentées et d'autres modes de réalisation et variantes apparaîtront clairement à l'homme du métier.

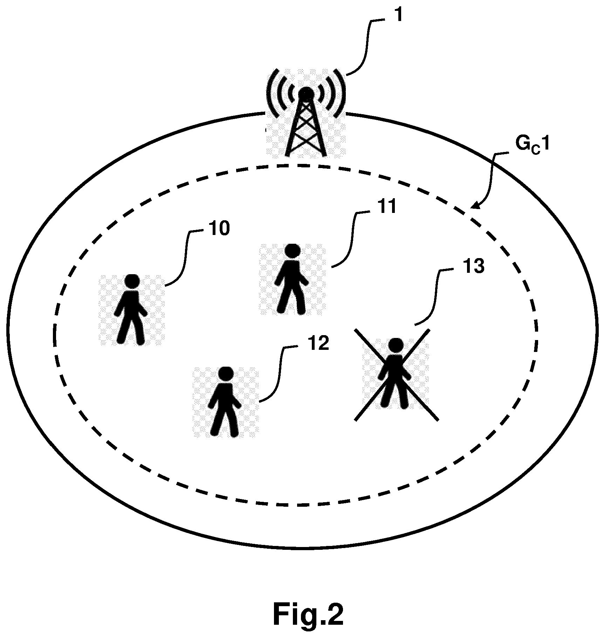

La figure 2 illustre une communication de groupe G_{c}1 comprenant une pluralité d'utilisateur 10, 11, 12, 13. Ces utilisateurs 10-13 communiquent entre eux de manière sécurisée via un réseau radio centralisé représenté sous la forme d'une antenne 1. Ce réseau centralisé est, par exemple, un réseau compatible 4G et/ou 5G.

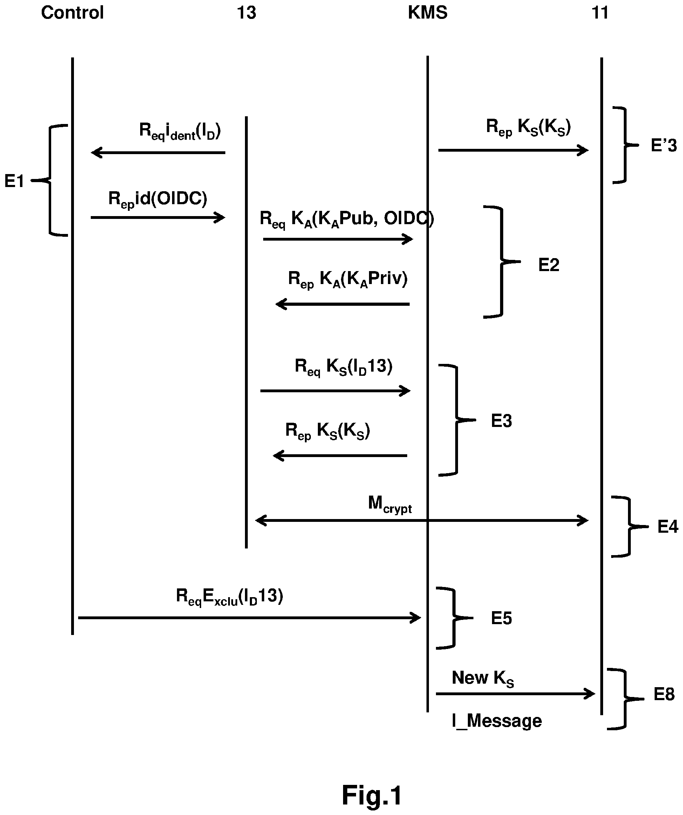

La figure 1 illustre les étapes d'un procédé de gestion dans une communication de groupe. Ces étapes sont réalisées entre un serveur de contrôle Control, un utilisateur 13 devenant malveillant, un serveur de gestion de clés KMS et un autre utilisateur 11.

Le serveur de contrôle est adapté pour autoriser/empêcher l'accès des utilisateurs 10-13 aux communications de groupe sécurisés.

Les utilisateurs 11 et 13 possèdent des terminaux adaptés pour intervenir dans la communication de groupe via le réseau de communication. Dans la suite de la description, il est compris qu'utiliseur et terminal de l'utilisateur sont synonymes.

Le serveur de gestion de clés KMS est adapté pour générer et délivrer des clés de chiffrement symétrique K_{S} aux différents utilisateurs d'une communication de groupe. Ce serveur de gestion KMS est physiquement centralisé sur un nœud du réseau de communication. En variante, la logique du serveur de gestion KMS est répartie sur plusieurs nœuds du réseau de communication de manière à avoir sur chacun de ces nœuds un fonctionnement vu des utilisateurs identique au cas où le serveur de gestion KMS est physiquement centralisé.

Dans une première étape d'authentification E1, l'utilisateur 13, qui n'est pas encore identifié comme étant malveillant, cherche à être joignable par des communications sécurisées. Pour cela, une requête d'authentification R_{eq}id est transmise au serveur de contrôle Control. Cette requête d'authentification R_{eq}i_{dent} comprend l'identification I_{D}13 de l'utilisateur 13. En retour, le serveur de contrôle Control fournit dans une réponse Rₑₚid un jeton OIDC (pour « Open ID Connect » en anglais) à l'utilisateur 13.

Dans une seconde étape E2, l'utilisateur 13 cherche à obtenir une clé de chiffrement asymétrique privée K_{A}Priv afin de pouvoir échanger de manière sécurisée avec d'autres utilisateurs des clés de chiffrement symétrique attribuées préalablement à une communication sécurisée. Pour cela, l'utilisateur 13 envoie une requête R_{eq}K_{A} au serveur de gestion de clés KMS. Cette requête R_{eq}K_{A} comprend une clé asymétrique publique K_{A}Pub et le jeton OIDC. La clé asymétrique publique K_{A}Pub est associée à l'utilisateur 13. Dans un mode de réalisation préférentiel, la clé asymétrique publique K_{A}Pub correspond à l'identifiant I_{D}13 de l'utilisateur 13. En retour, le serveur KMS envoie une réponse RₑₚK_{A} comprenant la clé asymétrique privée K_{A}Priv associée à la clé asymétrique publique K_{A}Pub.

Dans une troisième étape E3, l'utilisateur cherche à rejoindre une communication de groupe G_{C}1 et donc a besoin d'une clé de chiffrement symétrique K_{S}. Pour cela, l'utilisateur 13 envoie une requête R_{eq}K_{S} au serveur de gestion de clés KMS. Cette requête R_{eq}K_{S} comprend l'identifiant I_{D}13 de l'utilisateur 13. En retour, le serveur KMS envoie une réponse R_{eq}K_{S} comprenant la clé de chiffrement symétrique K_{S}. Cette clé de chiffrement symétrique K_{S} a été préalablement cryptée à l'aide de la clé de chiffrement asymétrique publique K_{A}Pub associée à l'utilisateur 13. Cet utilisateur 13 est ainsi apte à décrypter la clé de chiffrement symétrique cryptée à l'aide de la clé de chiffrement asymétrique privée K_{A}Priv qu'il possède.

Dans une quatrième étape E4, l'utilisateur 13 communique de manière sécurisée avec l'autre utilisateur 11 à l'aide de la clé de chiffrement symétrique K_{S}. C'est ainsi que l'ensemble des messages M_{crypt} envoyés par l'utilisateur 13 vers l'autre utilisateur 11 sont chiffrés par la clé de chiffrement symétrique K_{S}. De la même manière, l'ensemble des messages envoyés par l'autre utilisateur 11 vers l'utilisateur 13 sont chiffrés par la clé de chiffrement symétrique K_{S}. On notera que l'autre utilisateur 11 a reçu préalablement la même clé de chiffrement symétrique K_{S}. dans une étape E'3. On notera également que la clé de chiffrement symétrique K_{S} a une durée limitée, de sorte qu'une nouvelle clé de chiffrement symétrique K_{S} est automatiquement générée et transmise à l'utilisateur 13 et à l'autre utilisateur 11 lorsque la clé de chiffrement symétrique K_{S} arrive à expiration.

Dans le cas où il est identifié que l'utilisateur 13 est un utilisateur malveillant, le procédé de gestion comprend une étape E5 de réception d'une requête d'exclusion R_{eq}E_{xclu} de l'utilisateur 13 par le serveur KMS. Cette requête est envoyée par le serveur de contrôle Control. Ce serveur de contrôle Control a identifié la malveillance de l'utilisateur 13, par exemple, en analysant les communications de celui-ci. En variante, le serveur de contrôle Control a été prévenu par un autre utilisateur d'un problème concernant l'utilisateur 13. La requête d'exclusion R_{eq}E_{xclu} comprend l'identifiant I_{D}13 de l'utilisateur 13.

Dans une étape E6 (non représentée sur la figure 1), le serveur KMS détermine les autres utilisateurs 10, 11, 12 intervenant dans la communication de groupe G_{c}1 car, dans une étape E'3, le serveur KMS leur a remis une clé de chiffrement symétrique K_{S}

Dans une étape E7 (non représentée sur la figure 1), le serveur KMS génère une nouvelle clé de chiffrement symétrique New K_{S}.

Dans une étape E8, le serveur KMS transmet à l'autre utilisateur 11 la nouvelle clé de chiffrement symétrique New K_{S} ainsi qu'une notification I_Message d'utilisation de ladite nouvelle clé de chiffrement symétrique New K_{S} à la place de la clé de chiffrement symétrique K_{S}. Cette nouvelle clé de chiffrement symétrique New K_{S} est transmise de manière cryptée à l'aide de la clé de chiffrement asymétrique publique associée à l'utilisateur 11. De la même manière, cette nouvelle clé de chiffrement symétrique New K_{S} est transmise cryptée à l'ensemble des autres utilisateurs 10, 12, à partir des clés de chiffrement asymétrique publique respectives de ces utilisateurs. Cependant, la nouvelle clé de chiffrement symétrique New K_{S} n'est pas transmise à l'utilisateur 13, ce qui l'exclu automatiquement de toute communication avec les autres utilisateurs 10, 11, 12.

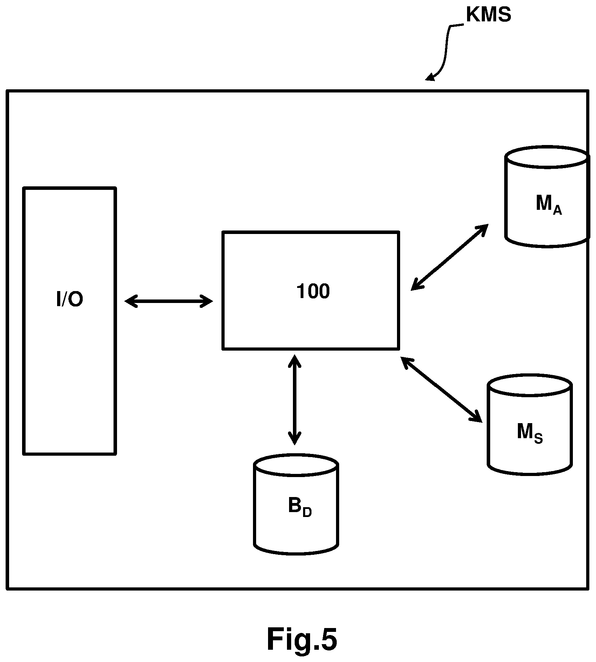

La figure 5 détaille les différents éléments du serveur de gestion de clé KMS. Ce serveur comprend :
- une unité centrale de traitement de données 100 ;
- une interface entrée/sortie I/O ;
- un module M_{A} de génération de clés de chiffrement asymétrique ;
- un module M_{S} de génération de clés de chiffrement symétrique ;
- une base de données B_{D}.

L'unité centrale de traitement de données 100 est adaptée pour traiter les données dans le serveur KMS. Cette unité centrale est reliée à l'interface entrée/sortie I/O, au module M_{G} de génération de clés, et à la base de données B_{D}.

L'interface entrée/sortie I/O est adaptée pour recevoir et transmettre des messages. Cette interface entrée/sortie I/O est ainsi apte à recevoir la requête R_{eq}K_{A} pour l'obtention de la clé de chiffrement asymétrique privée K_{A}Priv, la requête R_{eq}K_{S} pour l'obtention de la clé de chiffrement symétrique K_{S}, la requête d'exclusion R_{eq}E_{xclu} de l'utilisateur 13. L'interface entrée/sortie I/O est également apte à transmettre la clé de chiffrement asymétrique privée K_{A}Priv, la clé de chiffrement symétrique K_{S} ainsi que la nouvelle clé de chiffrement symétrique New K_{S}.

Le module M_{A} de génération de clés de chiffrement asymétrique est adapté pour générer des paires de clés de chiffrement asymétrique privée/publique. Ces paires de clé permettent une distribution sécurisée de clés de chiffrement symétrique.

Le module M_{S} de génération est adapté pour générer des clés de chiffrement symétrique K_{S}, New K_{S}. Ces clés de chiffrement sont générées lors de l'entrée d'un nouvel utilisateur dans le groupe de communication G_{c}1, lors du renouvellement de la clé de chiffrement symétrique, ou lors d'une requête d'exclusion d'un utilisateur dans la communication de groupe G_{c}1. Préférentiellement, les clés de chiffrement symétrique sont compatibles avec un algorithme AES (pour « Advanced Encryption Standard » en anglais).

La base de données B_{D} est adaptée pour lister les utilisateurs actifs ayant demandés des clés de chiffrement symétrique pour rejoindre des communications de groupe. Il est ainsi possible de tracer une possible compromission et de révoquer les clés potentiellement compromises.

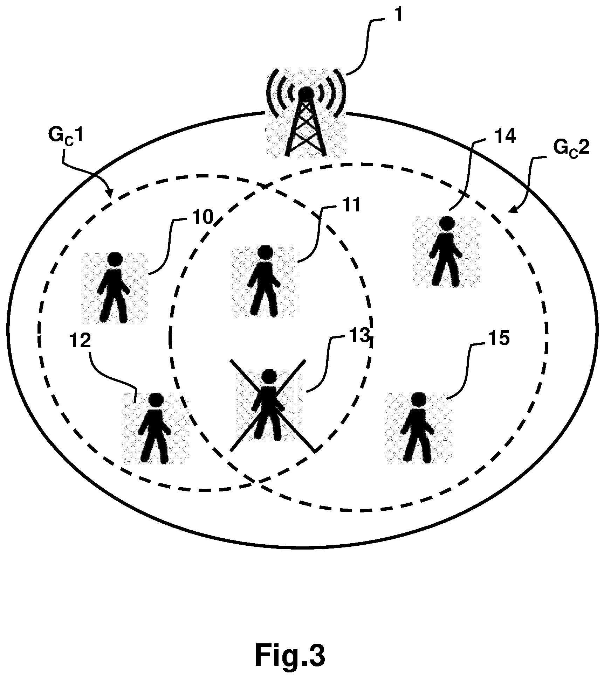

La figure 3 illustre un second mode de réalisation dans lequel l'utilisateur à exclure 13 intervient dans une première communication de groupe G_{C}1 et dans une seconde communication de groupe G_{C}2. Comme il a déjà été précisé la première de communication de groupe G_{C}1 comprend les utilisateurs 10 à 13. La seconde communication de groupe G_{C}2 comprend les utilisateurs 11, 13, 14 et 15. Les utilisateurs 11 et 13 sont donc communs aux deux communications G_{C}1, G_{C}2. Les différents utilisateurs 10-15 communiquent entre eux de manière sécurisée via le réseau radio centralisé représenté sous la forme de l'antenne 1. Plus précisément, les utilisateurs 10 à 13 communiquent entre eux de manière sécurisée en utilisant une première clé de chiffrement symétrique fournie par le serveur KMS au moment où chacun des utilisateurs a voulu rejoindre la communication de groupe G_{C}1. Les utilisateurs 11, 13 ,14 et 15 communiquent entre eux de manière sécurisée en utilisant une seconde clé de chiffrement symétrique fournie par le serveur KMS au moment où chacun des utilisateurs a voulu rejoindre la communication de groupe G_{C}2. Les utilisateurs 11 et 13 communs aux deux communications G_{C}1, G_{C}2 sont donc en possession de deux clés de chiffrement symétrique.

Dans le cas où le serveur KMS reçoit une requête d'exclusion R_{eq}E_{xclu} de l'utilisateur 13. Le procédé de gestion comprend une étape E'5 de détermination des communications de groupe dans lesquelles intervient l'utilisateur à exclure. Dans le cas du mode de réalisation de la figure 3, l'utilisateur à exclure 13 intervient à la fois dans la première communication de groupe G_{c}1 et dans la seconde communication de groupe G_{C}2. Le procédé de gestion comprend alors pour chaque communication de groupe G_{c}1, G_{c}2 dans lequel intervient l'utilisateur à exclure :
- une étape E'6 de détermination des autres utilisateurs intervenant dans ladite communication de groupe ;
- une étape E'7 de génération de la nouvelle clé de chiffrement symétrique New K_{S} ;
- une étape E'8 de transmission aux autres utilisateurs de la nouvelle clé de chiffrement symétrique et d'une notification I_Message' pour l'utilisation de ladite nouvelle clé de chiffrement symétrique à la place de la clé de chiffrement symétrique utilisée avant la réception de la requête d'exclusion de l'utilisateur, ladite nouvelle clé de chiffrement symétrique n'étant pas transmise à l'utilisateur à exclure.

Le procédé génère alors la création de deux nouvelles clé de chiffrement symétrique New K_{S}, une pour chaque communication de groupe G_{c}1, G_{C}2.

On notera que dans ce mode de réalisation, la base de données B_{D} de la figure 5 est apte à lister les utilisateurs 10-16 intervenant dans les deux communications de groupe G_{c}1, G_{c}2.

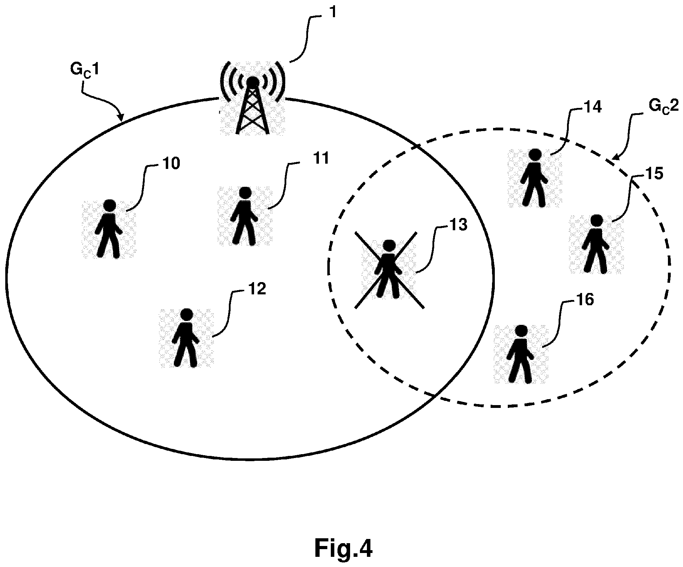

La figure 4 illustre un troisième mode de réalisation de l'invention. Dans ce mode de réalisation, l'utilisateur à exclure 13 intervient dans une première communication de groupe G_{c}1 utilisant un réseau radio centralisé et dans une seconde communication de groupe G_{c}2 utilisant un réseau radio décentralisé, dit également réseau ad 'hoc dans lequel les utilisateurs sont autonomes et n'ont pas accès au serveur KMS. Cet utilisateur 13 est ici à l'initiative de la seconde communication de groupe et a pu fournir une clé de chiffrement aux autres utilisateurs n'ayant pas accès au serveur KMS par le réseau radio centralisé. Cette fourniture de clé a pu se faire de manière sécurisée grâce au chiffrement des clés de chiffrement symétrique par la clé publique IBE de chaque utilisateur. L'exclusion de l'utilisateur 13 entraîne alors la libération de chacun des autres utilisateurs 14, 15, 16 de la seconde communication de groupe G_{c}2 dès lors qu'ils retrouvent la connectivité avec le réseau radio centralisé et peuvent vérifier auprès du serveur KMS la validité de la clé publique IBE de l'initiateur de la seconde communication de groupe qui protégeait la clé symétrique.

On notera que le procédé peut s'appliquer à des communications de groupes limitées à deux utilisateurs, un utilisateur initiateur et un utilisateur sollicité, l'utilisateur initiateur transmettant de manière sécurisée par les clés asymétriques IBE la clé de chiffrement symétrique de la communication dite communication point-à-point.

L'invention permet de mettre en œuvre les étapes suivantes au niveau du serveur de gestion des clés KMS :
- une répartition des utilisateurs en un ou plusieurs domaines de sécurité, un utilisateur pouvant appartenir à plusieurs domaines de sécurité et un domaine de sécurité pouvant tenir compte d'un mode de connexion ;
- la constitution de listes d'utilisateurs actifs par communication sécurisée auxquels une clé de chiffrement symétrique a été remise ;
- la génération et le stockage de paires de clés de chiffrement asymétrique IBE pour tous les domaines de sécurité afin que chaque utilisateur puisse disposer d'une ou plusieurs paires de clés de chiffrement asymétrique. Dans une sous-étape, il est possible de déterminer un domaine de sécurité où la construction des parties publiques de clés de chiffrement asymétrique IBE est faîte à partir d'une fonction de hash sur l'identité de l'utilisateur et un numéro d'ordre généré exclusivement par le serveur KMS. Ce domaine de sécurité permettra une sécurisation forte des utilisateurs en mode connecté à l'infrastructure radio (réseau radio centralisé) ;
- l'attribution d'une ou plusieurs paires de clés de chiffrement asymétrique IBE à chaque utilisateur qui ouvre une session avec authentification ;
- la génération de clés de chiffrement symétrique valides pour une durée de temps donné pour chaque communication de groupe avec un cryptage desdites clés de chiffrage symétrique par une clé asymétrique publique ;
- la constitution de listes par utilisateur des clés de chiffrement symétrique fournies depuis le début d'une session authentifiée ;
- l'exploitation de ces listes pour révoquer les clés de chiffrement symétrique lorsque l'utilisateur est placé en liste noire (utilisateur compromis) ;
- la révocation d'une clé de chiffrement symétrique en générant un nouvelle clé de chiffrement symétrique dont la durée de validité recouvre la durée de validité de la clé révoquée ;
- la notification de la révocation de la clé à chaque utilisateur impacté.

Dans le cas où la logique du serveur KMS est distribuée dans plusieurs nœuds du réseau, le numéro d'ordre utilisé pour la construction de la partie publique d'une paire de clés **IBE** pour un utilisateur est partagé par l'ensemble des nœuds. Les clés de chiffrement symétrique sont partagées entre les nœuds impliqués dans une communication de groupe en prenant le même principe de distribution et de stockage sécurisé que pour les utilisateurs. Chaque nœud dispose d'une structure dédiée sécurisée qui encapsule et crypte la clé de chiffrement symétrique partagée.

L'invention se fonde ainsi sur :
- des clés de chiffrement asymétrique **IBE** dédiées à la distribution et au stockage de certaines clés de cryptage symétrique où un couplage fort entre les deux types de clés permettent des opérations simples et immédiates de révocation de clés de groupe, de bannissement d'intervenant et de toutes actions pilotables depuis un serveur KMS ;
- une découpe en domaine de sécurité tenant compte du mode de connexion des utilisateurs. Un utilisateur change de domaine de sécurité selon le mode de connexion qu'il utilise. Ce mode peut comprendre le mode ad 'hoc et le mode de connexion à infrastructure Radio. Le domaine de sécurité est alors un sous-ensemble intervenants-mode de connexion ;
- un serveur KMS logiquement centralisé mais dont les algorithmes sécurisés sont distribuables sur le réseau d'accès Radio.

L'invention apporte alors les avantages suivants :
- le procédé permet de révoquer les clés de chiffrement symétrique lors d'une compromission d'une clé de chiffrement symétrique ou lors d'un bannissement d'un intervenant ;
- le procédé fait suite à l'authentification forte d'un utilisateur et doit assurer l'intégrité et la confidentialité des informations qu'il échange essentiellement avec des groupes d'intervenants. Ce procédé a à la fois une forte flexibilité et un haut degré de sécurité ;
- le procédé autorise une rétro-compatibilité avec un standard 3GPP ;
- le procédé peut être sans action manuelle des utilisateurs ou des administrateurs du service ;
- le procédé est dans une rémanence long terme sur les équipements terminaux ;
- le procédé est facilement intégrable avec un dispositif d'authentification forte à base de jetons ;
- le procédé est compatible avec différents modes de fonctionnement, par exemple, un mode connecté à une infrastructure radio ou un mode ad' hoc où les groupes d'utilisateurs sont autonomes ;
- le procédé est compatible avec des fonctions d'enregistrement et de réécoute ;
- le procédé est compatible avec l'utilisation de fédération d'identités et de découpes en de multiples domaines de sécurité ;
- le procédé est compatible avec des situations de déploiement de bulles tactiques où les serveurs de clés KMS peuvent être facilement déployés en bordure de réseau (Edge) ;
- le simple partage d'un numéro d'ordre entre des nœuds de bordure permet de gérer de manière distribuée la génération de clés de chiffrement asymétrique IBE nécessaires à la distribution de clés de chiffrement symétrique en environnement bulles tactiques ;
- le procédé permet un effet immédiat pour répudier un intervenant qui pourrait constituer une menace au bon déroulement d'une mission, ce qui évite tout effet papillon ;
- le procédé permet de limiter les temps pendant lesquels les failles de sécurité peuvent être exploitées ;
- le serveur de gestion de clés gère à la fois les groupes de communication et les clés IBE.

## Revendications

1. Procédé de gestion d'un utilisateur (13) dans une communication de groupe (G_{C}1), ladite communication de groupe comprenant une pluralité d'autres utilisateurs (10, 11, 12), l'utilisateur (13) et la pluralité d'autres utilisateurs (10, 11, 12) étant aptes à communiquer entre eux de manière sécurisée dans ladite communication de groupe (G_{C}1) en utilisant une clé de chiffrement symétrique (K_{S}), ledit procédé de gestion comportant :
- une étape (E5) de réception d'une requête d'exclusion (R_{eq}E_{xclu}) de l'utilisateur (13), dit utilisateur à exclure, ladite requête d'exclusion (R_{eq}E_{xclu}) ayant été envoyée par un serveur de contrôle (Control) à un serveur de gestion de clés (KMS) ;
- une étape (E6) de détermination des autres utilisateurs (10, 11, 12) apte à intervenir dans ladite communication de groupe ;
- une étape (E7) de génération d'une nouvelle clé de chiffrement symétrique (New K_{S}) ;
- une étape (E8) de transmission aux autres utilisateurs (10, 11, 12) de la nouvelle clé de chiffrement symétrique (New K_{S}) et d'une notification (I-message) pour l'utilisation de ladite nouvelle clé de chiffrement symétrique (New K_{S}) à la place de la clé de chiffrement symétrique (K_{S}) utilisée avant la réception de la requête d'exclusion de l'utilisateur (13), ladite nouvelle clé de chiffrement symétrique (New K_{S}) n'étant pas transmise à l'utilisateur à exclure (13), lesdites étapes de détermination (E6), de génération (E7) et de transmission (E8) étant réalisées par le serveur de gestion de clés (KMS).

2. Procédé de gestion selon la revendication 1, dans lequel l'utilisateur (10-15) à exclure intervenant dans plusieurs communications de groupe (G_{C}1, G_{C}2), ledit procédé comporte :
- une étape (E'5) de détermination des communications de groupe dans lesquels intervient l'utilisateur à exclure (13) ;
- pour chaque communication de groupe dans laquelle intervient l'utilisateur à exclure (13) :
- une étape (E'6) de détermination des autres utilisateurs apte à intervenir dans ladite communication de groupe ;
- une étape (E'7) de génération d'une nouvelle clé de chiffrement symétrique ;
- une étape (E'8) de transmission aux autres utilisateurs de la nouvelle clé de chiffrement symétrique et d'une notification pour l'utilisation (I-message') de ladite nouvelle clé de chiffrement symétrique à la place de la clé de chiffrement symétrique utilisée avant la réception de la requête d'exclusion de l'utilisateur, ladite nouvelle clé de chiffrement symétrique n'étant pas transmise à l'utilisateur à exclure (13).

3. Procédé de gestion selon l'une quelconque des revendications 1 à 2, dans lequel, les clés de chiffrement symétrique ayant une durée de validité prédéterminée, la nouvelle clé de chiffrement symétrique (New K_{S}) a une durée de validité identique à celle de la clé de chiffrement symétrique (K_{S}) qu'elle remplace.

4. Procédé de gestion selon l'une quelconque des revendications 1 à 3, dans lequel la nouvelle clé de chiffrement symétrique (New K_{S}) est compatible avec un algorithme AES.

5. Procédé de gestion selon l'une quelconque des revendications 1 à 4, dans lequel préalablement à l'étape de transmission de la nouvelle clé de chiffrement symétrique (New K_{S}), ladite nouvelle clé de chiffrement symétrique (New K_{S}) est cryptée à l'aide d'une clé de chiffrement asymétrique publique (K_{A}Pub) pour former une clé de chiffrement symétrique cryptée, ladite clé de chiffrement symétrique cryptée étant apte à être décryptée par un des autres utilisateurs détenant une clé de chiffrement asymétrique privée (K_{A}Priv) associée à ladite clé de chiffrement asymétrique publique (K_{A}Pub).

6. Procédé de gestion selon la revendication 5, dans lequel une paire de clés comprenant la clé de chiffrement asymétrique publique (K_{A}Pub) et la clé de chiffrement asymétrique privée (K_{A}Priv) est spécifique à chaque utilisateur.

7. Procédé de gestion selon la revendication 6, dans lequel la paire de clés est générée à partir d'un identifiant de l'utilisateur.

8. Procédé de gestion selon la revendication 7, dans lequel ledit procédé comprend une étape de détermination d'un domaine de sécurité dans lequel tout ou partie de la clé de chiffrement asymétrique publique (K_{A}Pub) est réalisée à partir d'une fonction de hash de l'identifiant de l'utilisateur et d'un numéro d'ordre.

9. Procédé de gestion selon l'une quelconque des revendications 1 à 8, dans lequel, l'utilisateur (13) et la pluralité d'autres utilisateurs (10, 11, 12, 14, 15) communiquent via un réseau radio centralisé compatible 4G et/ou 5G.

10. Procédé de gestion selon l'une quelconque des revendications 1 à 9, dans lequel l'utilisateur à exclure (13) intervient dans une première communication de groupe (G_{C}1) utilisant un réseau radio centralisé et intervient dans une seconde communication de groupe (G_{C}2) utilisant un réseau radio décentralisé, ledit utilisateur à exclure (13) étant à l'initiative de l'établissement de ladite seconde communication de groupe (G_{C}2), l'exclusion dudit utilisateur (13) entraîne une libération de cette seconde communication de groupe (G_{C}2) dès que les autres utilisateurs (14, 15, 16) intervenant dans la seconde communication de groupe (G_{C}2) peuvent accéder au réseau radio centralisé.

11. Procédé de gestion selon l'une quelconque des revendications 1 à 10, dans lequel l'utilisateur à exclure (13) intervient dans une communication de groupe limitée à deux utilisateurs, un utilisateur initiateur et un utilisateur sollicité, l'utilisateur initiateur transmettant de manière sécurisée par les clés asymétriques **IBE** la clé de chiffrement symétrique de la communication dite communication point-à-point

12. Serveur de gestion de clés pour la transmission d'une clé de chiffrement symétrique à des utilisateurs dans une communication de groupe en vue de communiquer de manière sécurisée dans ladite communication de groupe, ledit serveur de gestion de clés (KMS) comprenant les éléments suivants :
- une unité centrale de traitement de données (100) ;
- une interface entrée/sortie (I/O) ;
- un module (M_{A}) de génération de clés de chiffrement asymétrique ;
- un module (M_{S}) de génération de clés de chiffrement symétrique ;
- une base de données (B_{D}) listant les utilisateurs appartenant au groupe de communication, lesdits éléments étant configurés pour mettre en œuvre les étapes d'un procédé de gestion d'un utilisateur à exclure hors de la communication de groupe, selon l'une quelconque des revendications 1 à 11.

13. Serveur de gestion selon la revendication 12, l'utilisateur à exclure intervenant dans une pluralité de communications de groupe (G_{C}1, G_{C}2), ladite base de données (B_{D}) est apte à lister les utilisateurs intervenant dans ladite pluralité de communications de groupe.

14. Serveur de gestion selon l'une quelconque des revendications 12 ou 13, dans lequel ledit serveur de gestion est réparti sur plusieurs nœuds d'un réseau de communication.

## Patentansprüche

1. Verfahren zur Verwaltung eines Benutzers (13) in einer Gruppenkommunikation (G_{C}1), wobei die Gruppenkommunikation eine Vielzahl von anderen Benutzern (10,11,12) umfasst, wobei der Benutzer (13) und die Vielzahl von anderen Benutzern (10, 11, 12) imstande sind, in der Gruppenkommunikation (G_{C}1) durch Verwenden eines symmetrischen Verschlüsselungsschlüssels (K_{S}) sicher miteinander zu kommunizieren, wobei das Verfahren zur Verwaltung umfasst:
- einen Schritt (E5) zum Empfangen einer Ausschlussanfrage (R_{eq}E_{xclu}) desBenutzers (13), auszuschließender Benutzer genannt, wobei dieAusschlussanfrage (R_{eq}E_{xclu}) von einem Kontrollserver (Control) an einen Schlüsselverwaltungsserver(KMS) gesendet worden ist;
- einen Schritt (E6) zum Bestimmen der anderen Benutzer (10, 11, 12), die imstande sind, in der Gruppenkommunikation das Wort zu ergreifen;
- einen Schritt (E7) zum Generieren eines neuen symmetrischen Verschlüsselungsschlüssels (New K_{S});
- einen Schritt (E8) zum Übertragen zu den anderen Benutzern (10, 11, 12) des neuen symmetrischen Verschlüsselungsschlüssels (New K_{S}) und einer Benachrichtigung (I-message) zur Verwendung des neuen symmetrischen Verschlüsselungsschlüssels (New Ks) anstelle des symmetrischen Verschlüsselungsschlüssels (Ks), der vor dem Empfangen der Anfrage zum Ausschluss des Benutzers (13) verwendet worden ist, wobei der neue symmetrische Verschlüsselungsschlüssel (New K_{S}) dem auszuschließenden Benutzer (13) nicht übertragen wird, wobei die Schritte zum Bestimmen (E6), zum Generieren (E7) und zum Übertragen (E8) durch den Schlüsselverwaltungsserver (KMS) ausgeführt werden.

2. Verfahren zur Verwaltung nach Anspruch 1, wobei das Verfahren, da der auszuschließende Benutzer (10-15) in mehreren Gruppenkommunikationen (G_{C}1, G_{C}2) das Wort ergreift, umfasst:
- einen Schritt (E'5) zum Bestimmen der Gruppenkommunikationen, in denen der auszuschließende Benutzer (13) das Wort ergreift;
- für jede Gruppenkommunikation, wobei der auszuschließende Benutzer (13) das Wort ergreift:
- einen Schritt (E'6) zum Bestimmen der anderen Benutzer, die imstande sind, in der Gruppenkommunikation das Wort zu ergreifen;
- einen Schritt (E'7) zum Generieren eines neuen symmetrischen Verschlüsselungsschlüssels;
- einen Schritt (E'8) zum Übertragen zu den anderen Benutzern des neuen symmetrischen Verschlüsselungsschlüssels und einer Benachrichtigung zur Verwendung (I-message') des neuen symmetrischen Verschlüsselungsschlüssels anstelle des symmetrischen Verschlüsselungsschlüssels, der vor dem Empfangen der Anfrage zum Ausschluss des Benutzers verwendet worden ist, wobei der neue symmetrische Verschlüsselungsschlüssel dem auszuschließenden Benutzer (13) nicht übertragen wird.

3. Verfahren zur Verwaltung nach einem der Ansprüche 1 bis 2, wobei der neue symmetrische Verschlüsselungsschlüssel (New K_{S}), da die symmetrischen Verschlüsselungsschlüssel eine vorbestimmte Gültigkeitsdauer aufweisen, eine identische Gültigkeitsdauer wie jene des symmetrischen Verschlüsselungsschlüssels (K_{S}) aufweist, den er ersetzt.

4. Verfahren zur Verwaltung nach einem der Ansprüche 1 bis 3, wobei der neue symmetrische Verschlüsselungsschlüssel (New K_{S}) mit einem AES-Algorithmus kompatibel ist.

5. Verfahren zur Verwaltung nach einem der Ansprüche 1 bis 4, wobei vor dem Schritt zum Übertragen des neuen symmetrischen Verschlüsselungsschlüssels (New K_{S}) der neue symmetrische Verschlüsselungsschlüssel (New K_{S}) mithilfe eines öffentlichen asymmetrischen Verschlüsselungsschlüssels (K_{A}Pub) kodiert wird, um einen kodierten symmetrischen Verschlüsselungsschlüssel zu bilden, wobei der kodierte symmetrische Verschlüsselungsschlüssel imstande ist, von einem der anderen Benutzer dekodiert zu werden, der einen privaten asymmetrischen Verschlüsselungsschlüssel (K_{A}Priv) besitzt, der dem öffentlichen asymmetrischen Verschlüsselungsschlüssel (K_{A}Pub) zugeordnet ist.

6. Verfahren zur Verwaltung nach Anspruch 5, wobei ein Schlüsselpaar, das den öffentlichen asymmetrischen Verschlüsselungsschlüssel (K_{A}Pub) und den privaten asymmetrischen Verschlüsselungsschlüssel (K_{A}Priv) umfasst, benutzerspezifisch ist.

7. Verfahren zur Verwaltung nach Anspruch 6, wobei das Schlüsselpaar aus einer Kennung des Benutzers generiert wird.

8. Verfahren zur Verwaltung nach Anspruch 7, wobei das Verfahren einen Schritt zum Bestimmen einer Sicherheitsdomäne umfasst, wobei der gesamte öffentliche asymmetrische Verschlüsselungsschlüssel (K_{A}Pub) oder ein Teil davon aus einer Hash-Funktion der Kennung des Benutzers und einer fortlaufenden Nummer realisiert wird.

9. Verfahren zur Verwaltung nach einem der Ansprüche 1 bis 8, wobei der Benutzer (13) und die Vielzahl von anderen Benutzern (10, 11, 12, 14, 15) über ein zentralisiertes, mit 4G und/oder 5G kompatibles Funknetz kommunizieren.

10. Verfahren zur Verwaltung nach einem der Ansprüche 1 bis 9, wobei der auszuschließende Benutzer (13) in einer ersten Gruppenkommunikation (G_{C}1) das Wort ergreift, die ein zentralisiertes Funknetz verwendet, und in einer zweiten Gruppenkommunikation (G_{C}2) das Wort ergreift, die ein dezentralisiertes Funknetz verwendet, wobei der auszuschließende Benutzer (13) die Initiative zum Erstellen der zweiten Gruppenkommunikation (G_{C}2) ergreift, wobei der Ausschluss des Benutzers (13) zu einer Freigabe dieser zweiten Gruppenkommunikation (G_{C}2) führt, sobald die anderen Benutzer (14, 15, 16), die in der zweiten Gruppenkommunikation (G_{C}2) das Wort ergreifen, auf das zentralisierte Funknetz zugreifen können.

11. Verfahren zur Verwaltung nach einem der Ansprüche 1 bis 10, wobei der auszuschließende Benutzer (13) in einer auf zwei Benutzer, einen initiierenden Benutzer und einen erbetenen Benutzer beschränkten Gruppenkommunikation das Wort ergreift, wobei der initiierende Benutzer den symmetrischen Verschlüsselungsschlüssel der Punktzu-Punkt-Kommunikation genannten Kommunikation sicher durch die asymmetrischen IBE-Schlüssel überträgt.

12. Schlüsselverwaltungsserver zum Übertragen eines symmetrischen Verschlüsselungsschlüssels an Benutzer in einer Gruppenkommunikation im Hinblick auf sicheres Kommunizieren in der Gruppenkommunikation, wobei der Schlüsselverwaltungsserver (KMS) die folgenden Elemente umfasst:
- eine Zentraleinheit zur Datenverarbeitung (100);
- eine Eingangs-/Ausgangsschnittstelle (I/O);
- ein Modul (M_{A}) zum Generieren asymmetrischer Verschlüsselungsschlüssel;
- ein Modul (M_{S}) zum Generieren symmetrischer Verschlüsselungsschlüssel;
- eine Datenbank (B_{D}), die die Benutzer auflistet, die der Kommunikationsgruppe angehören, wobei die Elemente konfiguriert sind, um die Schritte des Verfahrens zur Verwaltung eines auszuschließenden Benutzers aus der Gruppenkommunikation nach einem der Ansprüche 1 bis 11 umzusetzen.

13. Verwaltungsserver nach Anspruch 12, wobei der auszuschließende Benutzer in einer Vielzahl von Gruppenkommunikationen (G_{C}1, G_{C}2) das Wort ergreift, die Datenbank (B_{D}) imstande ist, die Benutzer aufzulisten, die in der Vielzahl von Gruppenkommunikationen das Wort ergreifen.

14. Verwaltungsserver nach einem der Ansprüche 12 oder 13, wobei der Verwaltungsserver auf mehrere Knoten eines Kommunikationsnetzes verteilt ist.

## Claims

1. Method for managing a user (13) in a group communication (G_{C}1), said group communication comprising a plurality of other users (10, 11, 12), the user (13) and the plurality of other users (10, 11, 12) being able to communicate securely with each other in said group communication (G_{C}1) using a symmetric encryption key (K_{S}), said management method comprising:
- a step (E5) of receiving an exclusion request (R_{eq}E_{xclu}) from the user (13), referred to as the user to be excluded, said exclusion request (R_{eq}E_{xclu}) having been sent by a control server (Control) to a key management server (KMS);
- a step (E6) of determining the other users (10, 11, 12) capable of participating in said group communication;
- a step (E7) of generating a new symmetric encryption key (New K_{S});
- a step (E8) of transmitting to the other users (10, 11, 12) of the new symmetric encryption key (New K_{S}) and a notification (I-message) for the use of said new symmetric encryption key (New K_{S}) in place of the symmetric encryption key (K_{S}) used before the receipt of the user exclusion request (13), said new symmetric encryption key (New K_{S}) not being transmitted to the user to be excluded (13), said steps of determining (E6), generating (E7) and transmitting (E8) being performed by the key management server (KMS).

2. Management method according to claim 1, wherein the user (10-15) to be excluded participates in several group communications (G_{C}1, G_{C}2), said method comprising:
- a step (E'5) of determining the group communications wherein the user to be excluded (13) participates;
- for each group communication wherein the user to be excluded (13) participates:
- a step (E'6) of determining the other users able to participate in said group communication;
- a step (E'7) of generating a new symmetric encryption key;
- a step (E'8) of transmitting the new symmetric encryption key to the other users and a notification for the use (I-message') of said new symmetric encryption key in place of the symmetric encryption key used before receiving the user exclusion request, said new symmetric encryption key not being transmitted to the user to be excluded (13).

3. Management method according to any of claims 1 to 2, wherein, the symmetric encryption keys having a predetermined validity period, the new symmetric encryption key (New K_{S}) has a validity period identical to that of the symmetric encryption key (K_{S}) which it replaces.

4. Management method according to any of claims 1 to 3, wherein the new symmetric encryption key (New K_{S}) is compatible with an AES algorithm.

5. Management method according to any of claims 1 to 4, wherein prior to the step of transmitting the new symmetric encryption key (New K_{S}), said new symmetric encryption key (New K_{S}) is encrypted using a public asymmetric encryption key (K_{A}Pub) to form an encrypted symmetric encryption key, said encrypted symmetric encryption key being capable of being decrypted by one of the other users holding a private asymmetric encryption key (K_{A}Priv) associated with said public asymmetric encryption key (K_{A}Pub).

6. Management method according to claim 5, wherein a pair of keys comprising the public asymmetric encryption key (K_{A}Pub) and the private asymmetric encryption key (K_{A}Priv) is specific to each user.

7. Management method according to claim 6, wherein the pair of keys is generated from a user identifier.

8. A management method according to claim 7, wherein said method comprises a step of determining a security domain in which all or part of the public asymmetric encryption key (K_{A}Pub) is made from a hash function of the user identifier and an order number.

9. Management method according to any of claims 1 to 8, wherein the user (13) and the plurality of other users (10, 11, 12, 14, 15) communicate via a centralized 4G and/or 5G compatible radio network.

10. Management method according to any of claims 1 to 9, wherein the user to be excluded (13) participates in a first group communication (G_{C}1) using a centralized radio network and participates in a second group communication (G_{C}2) using a decentralized radio network, said user to be excluded (13) initiating the establishment of said second group communication (G_{C}2), the exclusion of said user (13) results in the release of this second group communication (G_{C}2) as soon as the other users (14, 15, 16) participating in the second group communication (G_{C}2) can access the centralized radio network.

11. Management method according to any of claims 1 to 10, wherein the user to be excluded (13) participates in a group communication limited to two users, an initiating user and a requested user, the initiating user securely transmitting, using IBE asymmetric keys, the symmetric encryption key for the communication known as point-to-point communication.

12. Key management server for transmitting a symmetric encryption key to users in a group communication in order to communicate securely in said group communication, said key management server (KMS) comprising the following elements:
- a central data processing unit (100);
- an input/output (I/O) interface;
- an asymmetric encryption key generation module (M_{A});
- a symmetric encryption key generation module (M_{S});
- a database (B_{D}) listing the users belonging to the communication group, said elements being configured to implement the steps of a method for managing a user to be excluded from group communication, according to any of claims 1 to 11.

13. Management server according to claim 12, wherein the user to be excluded participates in a plurality of group communications (G_{C}1, G_{C}2), said database (B_{D}) is capable of listing the users participating in said plurality of group communications.

14. Management server according to any of claims 12 or 13, wherein said management server is distributed across several nodes of a communication network.
